# EUROPÄISCHE PATENTSCHRIFT

(11) **EP 1 646 545 B1**
(45) Veröffentlichungstag und Bekanntmachung des Hinweises auf die Patenterteilung: **28.02.2007**
(21) Anmeldenummer: 04740677.2
(22) Anmeldetag: 06.07.2004
(51) Int. Cl.: B60T 13/68, B60T 13/58, B60T 17/22

(54) **BREMSVORRICHTUNG EINES SCHIENENFAHRZEUGS**
BRAKING DEVICE FOR A RAIL VEHICLE
DISPOSITIF DE FREINAGE DE VEHICULE SUR RAIL

(30) Priorität: 10.07.2003 DE 10331199
(43) Veröffentlichungstag der Anmeldung: 19.04.2006
(73) Patentinhaber: KNORR-BREMSE Systeme für Schienenfahrzeuge GmbH, 80809 München (DE)
(72) Erfinder: STRAUBE, Wolfgang, 85221 Dachau (DE)
(74) Vertreter: Mattusch, Gundula
(86) Internationale Anmeldenummer: PCT/EP2004/007349
(87) Internationale Veröffentlichungsnummer: WO 2005/005216

(56) Entgegenhaltungen:
- US-A- 3 944 287
- US-A- 5 662 391
- US-A- 5 746 485
- US-A- 5 934 765
- US-A- 5 967 620

## Beschreibung

### Stand der Technik

Die Erfindung betrifft eine Bremsvorrichtung eines Schienenfahrzeugs, gemäß der Gattung von Anspruch 1. Eine Bremsvorrichtung mit den Merkmalen des Oberbegriffs von Anspruch 1 ist zum Beispiel aus der US 5 662 391 A bekannt.

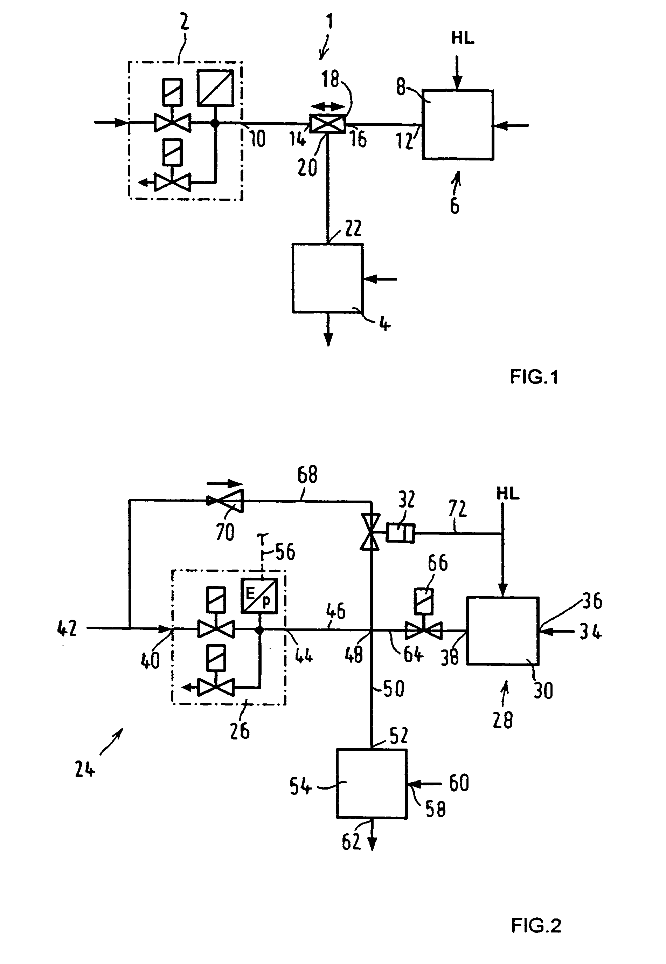

Eine solche bekannte Bremsvorrichtung ist in Fig. 1 dargestellt. Die Bremsvorrichtung beinhaltet eine aus Maßstabsgründen nicht gezeigte, elektrische Generatorbremse, deren Bremswirkung durch eine elektropneumatische Reibungsbremse 1 ergänzt ist (Blending). Aus Verschleißgründen wird vorrangig mittels der elektrischen Generatorbremse gebremst und, falls deren Bremsleistung nicht ausreicht, die elektropneumatische Reibungsbremse 1 zugeschaltet. Zur Bereitstellung der zusätzlich benötigten Bremsleistung umfasst die elektropneumatische Reibungsbremse 1 eine elektronische Regeleinrichtung 2 zur Erzeugung eines geregelten Vorsteuerdrucks, wobei in Abhängigkeit des Vorsteuerdrucks mittels eines Relaisventils 4 ein Bremsdruck für einen oder mehrere Bremszylinder generiert wird. Für über die normalen Betriebsbremszustände hinausgehende Bremszustände, wie beispielsweise eine Notbremsung oder für den Fall, dass die elektronische Regeleinrichtung 2 gestört ist, weist die elektropneumatische Reibungsbremse 1 zusätzlich eine pneumatische Einrichtung 6 zur Erzeugung eines Vorsteuerdrucks für das Relaisventil 4 auf.

Die pneumatische Einrichtung 6 kann eine mit einer Hauptluftleitung HL in Verbindung stehende Steuerventilanordnung 8 oder eine Druckbegrenzungseinrichtung beinhalten. Im ersten, in Fig.1 gezeigten Fall ist eine sog. indirekte Bremse verwirklicht, weil durch die Steuerventilanordnung 8 aus dem Druck in der Hauptluftleitung HL ein Vorsteuerdruck gebildet wird, in dessen Abhängigkeit wiederum der Bremsdruck im Relaisventil 4 erzeugt wird. Im zweiten Fall wird mittels der Druckbegrenzungseinrichtung der Druck in einem Druckreservoir auf einen bestimmten Wert begrenzt und als Vorsteuerdruck in das Relaisventil 4 eingesteuert, wodurch eine sog. direkte Bremse realisiert ist. Beiden Alternativen ist gemeinsam, dass die Druckausgänge 10, 12 der elektronischen Regeleinrichtung und der pneumatischen Einrichtung mit zugeordneten Eingängen 14, 16 eines Umschaltventils 18 verbunden sind, dessen Ausgang 20 an einen Steuereingang 22 des Relaisventils 4 angeschlossen ist.

Das Umschaltventil 18 bildet ein "Oder-Glied", d.h. es schaltet entweder den geregelten Vorsteuerdruck der elektronischen Regeleinrichtung 2 auf den Steuereingang 22 des Relaisventils 4 oder den durch die pneumatische Einrichtung 6 erzeugten Vorsteuerdruck. Bei normalen Betriebsbremsungen oder bei Notbremsungen wird üblicherweise der Druckausgang 10 der elektronischen Regeleinrichtung 2 auf den Steuereingang 22 des Relaisventils 4 geschaltet, während der Druckausgang 12 der pneumatischen Einrichtung 6 gesperrt bleibt. Lediglich bei Vorliegen eines Fehlers in der elektronischen Regeleinrichtung 2 schaltet das Umschaltventil 18 den Druckausgang 12 der pneumatischen Einrichtung 6 auf den Steuereingang 22 des Relaisventils 4.

Der vorliegenden Erfindung liegt die Aufgabe zugrunde, eine Bremsvorrichtung der eingangs erwähnten Art derart weiterzubilden, dass sie kostengünstiger zu fertigen ist und zuverlässiger arbeitet.

Erfindungsgemäß wird diese Aufgabe durch die kennzeichnenden Merkmale von Anspruch 1 gelöst.

Vorteile der Erfindung

Weil der Druckausgang der elektronischen Regeleinrichtung mit dem Steuereingang der beispielsweise durch das Relaisventil gebildeten Ventilanordnung ständig in druckleitender Verbindung steht, während dem Druckausgang der pneumatischen Einrichtung und dem Steuereingang des Relaisventils wenigstens ein Rückhalteventil zwischengeorcliiet ist, können bei geöffnetem Rückhalteventil sowohl der Vorsteuerdruck der elektronischen Regeleinrichtung als auch der Vorsteuerdruck der pneumatischen Einrichtung am Steuereingang des Relaisventils anstehen. Dies ist vor allem bei Notbremsungen oder bei Schnellbremsungen von Vorteil, wenn die gegenüber der pneumatischen Einrichtung schneller reagierende elektronische Regeleinrichtung rasch einen Vorsteuerdruck aufbaut und der etwas später einsetzende Vorsteuerdruck der pneumatischen Einrichtung als redundante Sicherheit zur Verfügung steht. Hierdurch wird der Zuverlässigkeit der Bremsvorrichtung gesteigert.

Gemäß einer besonders bevorzugten Ausführungsform wird das Rückhalteventil durch eine Sicherheitsschleife des Schienenfahrzeugs gesteuert und bei einem Fehler oder Ausfall der elektronischen Regeleinrichtung oder im Notbremsfall durchgeschaltet und ansonsten gesperrt.

Gemäß einer Weiterbildung dieser Ausführungsform wird das Rückhalteventil durch ein stromlos offenes und bestromt geschlossenes Magnetventil gebildet. Wenn dann im Falle einer Notbremsung die Sicherheitsschleife stromlos geschaltet ist, gelangt das Rückhalteventil in Öffnungsstellung und kann den Vorsteuerdruck der pneumatischen Einrichtung an den Steuereingang der Ventilanordnung durchschalten. Bei einer Notbremsung oder Schnellbremsung wird folglich der Steuereingang der Ventilanordnung sowohl von der elektronischen Regeleinrichtung als auch von der pneumatischen Einrichtung druckbeaufschlagt. Dadurch wird eine redundante Ansteuerung erzielt.

Im Falle einer direkten Bremse umfasst die pneumatische Einrichtung vorzugsweise eine Druckbegrenzungseinrichtung, beispielsweise ein lastabhängiges Druckbegrenzungsventil, durch welches der Vorsteuerdruck bei einer Notbremsung entsprechend dem aktuellen Lastzustand begrenzt wird. Alternativ kann die Erfindung auch bei einer indirekten Bremse verwirklicht sein, bei welcher die pneumatische Einrichtung eine mit einer Hauptluftleitung in Verbindung stehende Steuerventilanordnung beinhaltet.

Gegenüber dem Umschaltventil des Stands der Technik ist das erfindungsgemäß vorgesehene Rückhalteventil einfacher und kleiner aufgebaut, woraus günstigere Fertigungskosten resultieren.

### Zeichnungen

Ausführungsbeispiele der Erfindung sind in der Zeichnung dargestellt und in der nachfolgenden Beschreibung näher erläutert. In der Zeichnung zeigt
- Fig.1: einen schematischen Aufbau einer Bremsvorrichtung des Stands der Technik;
- Fig.2: einen schematischen Aufbau einer Bremsvorrichtung gemäß einer ersten Ausführungsform der Erfindung mit einer indirekten elektropneumatischen Reibungsbremse;
- Fig.3: einen schematischen Aufbau einer Bremsvorrichtung gemäß einer weiteren Ausführungsform der Erfindung mit einer direkten elelctropneumatischen Reibungsbremse;

### Beschreibung der Ausführungsbeispiele

In Fig.2 ist ein schematischer Aufbau einer Bremsvorrichtung gemäß einer ersten Ausführungsform der Erfindung gezeigt. Die Bremsvorrichtung beinhaltet eine aus Maßstabsgründen nicht gezeigte elektrische Generatorbremse, deren Bremswirkung durch eine elektropneumatische Reibungsbremse 24 ergänzt ist (Blending). Die elektropneumatische Reibungsbremse 24 umfasst wiederum eine elektronische Regeleinrichtung 26 und eine pneumatische Einrichtung 28, welche vorzugsweise eine mit einer Hauptluftleitung HL in Verbindung stehende Steuerventilanordnung 30 und ein pneumatisches Bypass-Ventil 32 beinhaltet.

Die Steuerventilanordnung, vorzugsweise ein einziges Steuerventil 30, besitzt einen mit einem Druckreservoir 34 in Verbindung stehenden Versorgungsanschluß 36 und erzeugt in Abhängigkeit des in der Hauptluftleitung HL anstehenden Drucks einen Vorsteuerdruck an seinem Druckausgang 38. Die elektronische Regeleinrichtung 26 ist ebenfalls über einen Versorgungsanschluß 40 an ein Druckreservoir 42 angeschlossen und steuert an ihrem Druckausgang 44 einen geregelten Vorsteuerdruck aus, der abhängig von einer benötigten Restbremsleistung ist, die die elektrische Generatorbremse nicht zur Verfügung stellen kann, welche bei Betriebsbremsungen zur Reduzierung des Verschleißes der Reibungsbremse 24 vorrangig eingesetzt wird. Der Druckausgang 44 der elektronischen Regeleinrichtung ist an eine pneumatische Leitung 46 angeschlossen, welche mit einem Konten 48 in Verbindung steht, von welchem sich eine weitere pneumatische Leitung 50 bis zu einem Steuereingang 52 einer Ventilanordnung 54 erstreckt, die beispielsweise durch ein Relaisventil gebildet wird. Über den Knoten 48 steht der Druckausgang 44 der elektronischen Regeleinrichtung 26 ständig mit dem Steuereingang 52 des Relaisventils 54 in Strömungsverbindung. Weiterhin wird die elektronische Regeleinrichtung 26 über eine elektrische Steuerleitung 56 von einem nicht gezeigten Bremssteuergerät angesteuert.

Ein Versorgungsanschluß 58 des Relaisventils 54 ist mit einem Druckreservoir 60 verbunden. Das Relaisventil 54 steuert in Abhängigkeit des an seinem Steuereingang 52 anstehenden Vorsteuerdrucks einen Bremsdruck an seinen Druckausgang 62 aus, welcher mit einem oder mehreren Bremszylindern verbunden ist.. Weiterhin geht von dem Druckausgang 38 des Steuerventils 30 der pneumatischen Einrichtung 28 eine pneumatische Leitung 64 aus, in welcher ein Rückhalteventil 66 angeordnet ist und welche ebenfalls in den Knoten 48 mündet. Das Rückhalteventil 66 ist vorzugsweise ein stromlos offenes und bestromt geschlossenes Magnetventil, das durch eine Sicherheitsschleife des Schienenfahrzeugs angesteuert wird.

Die elektronische Regeleinrichtung 26 wird zwischen ihrem Versorgungsanschluß 40 und ihrem Druckausgang 44 mittels einer pneumatischen Bypass-Leitung 68 überbrückt, in welcher sich ein Druckminderventil 70 und diesem nachgeordnet, das pneumatische Bypass-Ventil 32 befindet, das von einer von der Hauptluftleitung HL abzweigenden pneumatischen Steuerleitung 72 angesteuert ist.

Vor diesem Hintergrund ist die Funktionsweise der Bremsvorrichtung wie folgt : Wenn ausgehend von der Lösestellung der Bremsen, in welcher das Rückhalteventil 66 durch das nicht gezeigte Bremssteuergerät stromlos offen geschaltet ist, ein Bremsanforderungssignal im Rahmen einer normalen Betriebsbremsung gegeben wird, wird das Rückhalteventil 66 in seine bestromte Schließstellung umgeschaltet und hält einen Vorsteuerdruck zurück, welcher aufgrund einer mit dem Bremsanforderungssignal einhergehenden Drucksenkung in der Hauptluftleitung HL durch das Steuerventil 30 erzeugt worden ist. Gleichzeitig wird über die elektrische Steuerleitung 56 ein von der elektropneumatischen Reibungsbremse 24 geforderten Restbremsleistung abhängiges Bremsanforderungssignal an die elektronische Regeleinrichtung 26 herangeführt, welches daraufhin einen entsprechenden geregelten Vorsteuerdruck an seinem Druckausgang 44 erzeugt, der über die pneumatischen Leitungen 46, 50 den Steuereingang 52 des Relaisventils 54 erreicht, um einen entsprechenden Bremsdruck zu erzeugen.

Unter besonderen Betriebsbedingungen, beispielsweise im Falle eines Defekts der elektronischen Regeleinrichtung 26 oder eines Lecks in ihren Leitungen, wird aus der elektronischen Regeleinrichtung 26 kein Vorsteuerdruck oder ein zu niedriger Vorsteuerdruck ausgesteuert. Dies kann durch geeignete Sensoren detektiert werden, woraufhin die Sicherheitsschleife entstromt wird, so dass das Rückhalteventil 66 öffnet und den vom Steuerventil 30 erzeugten Vorsteuerdruck zum Relaisventil 54 durchsteuert, um einen Bremsdruck für die nachgeschalteten Bremszylinder aufzubauen.

Als zusätzliche Sicherheitsebene ruft der im Notbremsfall oder im Schnellbremsfall oder im Falle eines Fehlers oder Druckverlusts in der elektronischen Regeleinrichtung 26 auf den Wert Null abgesenkte Druck in der Hauptluftleitung HL eine Öffnung des ansonsten geschlossenen Bypass-Ventils 32 hervor, wodurch der am Versorgungsanschluß 40 der elektronischen Regeleinrichtung 26 anstehende und durch das Druckminderventil 70 auf einen bestimmten Wert eingestellte Reservoirdruck über die pneumatische Bypass-Leitung 68 zum Knoten 48 und von dort zum Steuereingang 52 des Relaisventils 54 gelangt.

Durch geeignete Abstimmung der Düsen, Volumina und Drücke in der elektropneumatischen Reibungsbremse 24 kann die Nachspeiseleistung der pneumatischen Einrichtung 28 ausreichend groß sein, um Fehler oder Druckverluste seitens der elektronischen Regeleinrichtung 26 zu überwinden, wenn auch der Druckaufbau demgegenüber etwas verzögert ist. Zur Steigerung der Druckaufbaugeschwindigkeit kann dem Steuerventil 30 eine Beschleunigungseinrichtung für den Druck in der Hauptluftleitung HL vorgeordnet sein.

Bei einer Notbremsung oder Schnellbremsung wird die Sicherheitsschleife stromlos geschaltet, wodurch das Rückhalteventil 66 öffnet, so dass der Steuereingang 52 des Relaisventils 54 sowohl von der elektronischen Regeleinrichtung 26 als auch von der pneumatischen Einrichtung 28 druckbeaufschlagt ist. Dadurch wird eine redundante Ansteuerung des Relaisventils erzielt.

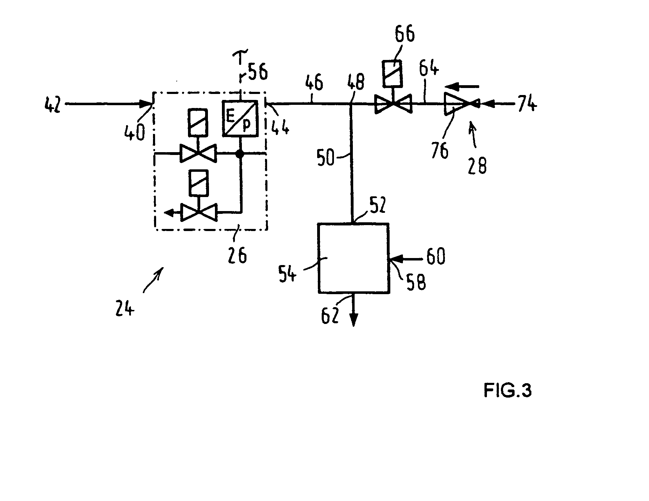

Bei dem weiteren Ausführungsbeispiel der Erfindung nach Fig.3 sind die gegenüber dem vorhergehenden Beispiel gleichbleibenden und gleichwirkenden Teile durch die gleichen Bezugszeilen gekennzeichnet. Im Unterschied zum ersten Ausführungsbeispiel ist bei dem Ausführungsbeispiel von Fig.3 keine indirekte pneumatische Bremse sondern eine direkte pneumatische Bremse gezeigt, bei welcher der von der pneumatischen Einrichtung 28 gelieferte Vorsteuerdruck für das Relaisventil 54 durch ein an ein Druckreservoir 74 angeschlossenes Druckbegrenzungsventil 76 eingestellt wird. Weiterhin wurde auf die pneumatische Bypass-Leitung 68 und das Bypass-Ventil 32 verzichtet. Ansonsten sind der Aufbau und die Funktionsweise identisch wie bei der vorangehend beschriebenen

Ausführungsform.

### Bezugszahlenliste

- 1: Reibungsbremse
- 2: elektronische Regeleinrichtung
- 4: Relaisventil
- 6: pneumatische Einrichtung
- 8: Steuerventil
- 10: Druckausgang
- 12: Druckausgang
- 14: Eingang
- 16: Eingang
- 18: Umschaltventil
- 20: Ausgang
- 22: Steuereingang
- 24: Reibungsbremse
- 26: elektronische Regeleinrichtung
- 28: pneumatische Einrichtung
- 30: Steuerventil
- 32: Bypass-Ventil
- 34: Druckreservoir
- 36: Versorgungsanschluß
- 38: Druckausgang
- 40: Versorgungsanschluß
- 42: Druckreservoir
- 44: Druckausgang
- 46: pneumatische Leitung
- 48: Knoten
- 50: pneumatische Leitung
- 52: Steuereingang
- 54: Relaisventil
- 56: Steuerleitung
- 58: Versorgungsanschluß
- 60: Druckreservoir
- 62: Druckausgang
- 64: pneumatische Leitung
- 66: Rückhalteventil
- 68: Bypass-Leitung
- 70: Druckminderventil
- 72: pneumatische Steuerleitung
- 74: Druckreservoir
- 76: Druckbegrenzungsventil

## Patentansprüche

1. Bremsvorrichtung für ein Schienenfahrzeug, beinhaltend eine elektrische Generatorbremse, deren Bremswirkung im Sinne eines Blendingverfahrens durch eine elektropneumatische Reibungsbremse (24) ergänzt ist, welche eine elektronische Regeleinrichtung (26) zur Erzeugung eines geregelten Vorsteuerdrucks und eine pneumatische Einrichtung (28) zur Erzeugung eines Vorsteuerdrucks umfasst, wobei in Abhängigkeit des Vorsteuerdrucks mittels einer Ventilanordnung (54) ein Bremsdruck für einen oder mehrere Bremszylinder erzeugbar ist, **dadurch gekennzeichnet, dass** ein Druckausgang (44) der elektronischen Regeleinrichtung (26) mit einem Steuereingang (52) der Ventilanordnung (54) ständig in druckleitender Verbindung steht, während einem Druckausgang (38) der pneumatischen Einrichtung (28) und dem Steuereingang (52) der Ventilanordnung (54) wenigstens ein Rückhalteventil (66) zwischengeordnet ist.

2. Bremsvorrichtung nach Anspruch 1, **dadurch gekennzeichnet, dass** das Rückhalteventil (66) durch eine Sicherheitsschleife des Schienenfahrzeugs gesteuert ist.

3. Bremsvorrichtung nach Anspruch 1 oder 2, **dadurch gekennzeichnet, dass** das Rückhalteventil (66) bei einem Fehler oder Ausfall der elektronischen Regeleinrichtung (26) oder im Notbremsfall durchgeschaltet und ansonsten gesperrt ist.

4. Bremsvorrichtung nach Anspruch 3, **dadurch gekennzeichnet, dass** bei einer Notbremsung oder Schnellbremsung der Steuereingang (52) der Ventilanordnung (54) sowohl von der elektronischen Regeleinrichtung (26) als auch von der pneumatischen Einrichtung (28) druckbeaufschlagt ist.

5. Bremsvorrichtung nach einem der vorhergehenden Ansprüche, **dadurch gekennzeichnet, dass** das Rückhalteventil (66) durch ein stromlos offenes und bestromt geschlossenes Magnetventil gebildet wird.

6. Bremsvorrichtung nach einem der vorhergehenden Ansprüche, **dadurch gekennzeichnet, dass** die Ventilanordnung (54) wenigstens ein Relaisventil beinhaltet.

7. Bremsvorrichtung nach einem der vorhergehenden Ansprüche, **dadurch gekennzeichnet, dass** die pneumatische Einrichtung (28) eine mit einer Hauptluftleitung (HL) in Verbindung stehende Steuerventilanordnung (30) oder eine Druckbegrenzungseinrichtung (76) umfasst.

8. Bremsvorrichtung Anspruch 7, **dadurch gekennzeichnet, dass** die Druckbegrenzungseinrichtung (76) ein lastabhängiges Druckbegrenzungsventil umfasst.

## Claims

1. A braking device for a rail vehicle containing an electrical generator brake, the braking effect of which is supplemented thanks to a blending process by an electro-pneumatic friction bake (24) which comprises an electronic regulating device (26) for generating a regulated pilot pressure and a pneumatic device (28) for generating a pilot pressure, it being possible to generate a braking pressure for one or more braking cylinders dependent on the pilot pressure by means of a valve arrangement (54),
**characterised in that**
a pressure output (44) on the electronic regulating device (26) is constantly connected to a control input (52) in the valve arrangement (54) in such a manner as to conduct pressure, while at least one retaining valve (66) is positioned between a pressure output (38) on the pneumatic device (28) and the control input (52) in the valve arrangement (54).

2. A braking device in accordance with claim 1,
**characterised in that**
the retaining valve (66) is controlled by a safety loop in the rail vehicle.

3. A braking device in accordance with claim 1 or 2,
**characterised in that**
the retaining valve (66) is opened in the event of a malfunction or failure of the electronic control device (26) or during emergency braking, and otherwise blocked.

4. A braking device in accordance with claim 3,
**characterised in that**
during emergency braking or rapid braking, pressure is applied to the control input (52) of the valve arrangement (54) by both the electronic regulating device (26) and the pneumatic device (28).

5. A braking device in accordance with one of the preceding claims,
**characterised in that**
the retaining valve (66) takes the form of a solenoid valve which is open when de-energised and closed when energised.

6. A braking device in accordance with one of the preceding claims,
**characterised in that**
the valve arrangement (54) has at least one relay valve.

7. A braking device in accordance with one of the preceding claims,
**characterised in that**
the pneumatic device (28) comprises a control valve arrangement (30) connected to a main air line (HL) or a pressure relief device (76).

8. A braking device in accordance with claim 7,
**characterised in that**
the pressure relief device (76) comprises a load-dependent pressure relief valve.

## Revendications

1. Dispositif de freinage d'un véhicule de chemin de fer comprenant un frein générateur électrique dont l'effet de freinage est complété, au sens d'un procédé blending, par un frein (24) à friction électropneumatique qui comprend un dispositif (26) électronique de régulation de production d'une pression de pilotage réglée et un dispositif (28) pneumatique de production d'une pression de pilotage, une pression de freinage pour un ou pour plusieurs cylindres de frein pouvant être produite au moyen d'un dispositif (54) à vanne en fonction de la pression de pilotage, **caractérisé en ce qu'**une sortie (44) de pression du dispositif (26) électronique de régulation communique constamment, de manière à conduire la pression, avec une entrée (52) de commande du dispositif (54) à vanne, tandis qu'un clapet (66) anti-retour est interposé entre une sortie (38) de pression du dispositif (28) pneumatique et l'entrée (52) de commande du dispositif (54) à vanne.

2. Dispositif de freinage suivant la revendication 1, **caractérisé en ce que** le clapet (66) anti-retour est commandé par une boucle de sécurité du véhicule de chemin de fer.

3. Dispositif de freinage suivant la revendication 1 ou 2, **caractérisé en ce que** le clapet (66) anti-retour est ouvert si le dispositif (26) électronique de régulation est défaillant ou en panne, ou en cas de freinage d'urgence, et sinon est fermé.

4. Dispositif de freinage suivant la revendication 3, **caractérisé en ce que**, lors d'un freinage d'urgence ou d'un freinage rapide, l'entrée (52) de commande du dispositif (54) à vanne est alimentée en pression tant par le dispositif (26) électronique de régulation que par le dispositif (28) pneumatique.

5. Dispositif de freinage suivant l'une des revendications précédentes, **caractérisé en ce que** le clapet (66) anti-retour est formé par une électrovanne qui est ouverte quand il ne passe pas de courant et qui est fermée quand il en passe.

6. Dispositif de freinage suivant l'une des revendications précédentes, **caractérisé en ce que** le dispositif (54) à vanne comporte au moins une vanne relais.

7. Dispositif de freinage suivant l'une des revendications précédentes, **caractérisé en ce que** le dispositif (28) pneumatique comprend un dispositif (30) à vanne pilote communiquant avec un conduit (HL) principal pour de l'air ou un dispositif (76) limiteur de pression.

8. Dispositif de freinage suivant la revendication 7, **caractérisé en ce que** le dispositif (76) limiteur de pression comprend une vanne dé limitation de la pression en fonction de la charge.
